# EUROPEAN PATENT APPLICATION

(11) **EP 1 932 730 A1**
(43) Date of publication of application: **18.06.2008**
(21) Application number: 07113725.1
(22) Date of filing: 30.10.2006
(51) Int. Cl.: B60R 22/02, B60R 22/26, B60N 2/28, B60R 22/18

(54) **Device for stepwise height adjustment of vehicle seat belt**

(62) Divisional of application: 06123208.8
(71) Applicant: KEY SAFETY SYSTEMS, INC., Sterling Heights, MI 48314 (US)
(72) Inventor: Palliser, Martyn, Carlisle, Cumbria (GB); Bell, John, Carlisle, Cumbria (GB)
(74) Representative: Freeman, Jacqueline Carol

(57) **Abstract**

A vehicle seat arrangement comprising: a seat backrest having an upholstered part overlying a load bearing plate; a first plurality of holes (11) passing through the upholstered part and a second, aligned, plurality of holes (11A) passing through the load bearing plate; a webbing adapter (16) having a loop for receiving seat belt (6) webbing; and means for removably connecting the webbing adapter to any one of a plurality of holes on the load bearing plate through the corresponding holes in the upholstered part of the seat backrest.

## Description

### Description

The present invention relates to a vehicle safety restraint, particularly a seat belt restraint which is suitable for restraining child occupants of a vehicle, but which can also be used for restraining adults.

Traditionally a seat belt safety restraint comprises a length of seat belt webbing connected at three points to load bearing parts of a vehicle. The webbing is arranged in use to have a lap section which passes laterally across the hips of the seat occupant, and a torso section which passes diagonally across the torso of the seat occupant from one hip to the opposite shoulder.

Typically one end of the webbing is attached to a sill anchor which is bolted to a load bearing longitudinal chasis member on one side of the seat, usually between the seat and an adjacent door. The lap and torso sections join at a buckle mechanism on the opposite side of the seat and the shoulder end of the webbing is attached to a retractor mounted to a load bearing part of the vehicle, for example a side pillar or sill, or directly to a load bearing seat, optionally via a webbing guide.

The retractor increases comfort for the seat occupant restrained by the belt since it allows the webbing to pay out under relatively low loads to enable limited movement of the restrained seat occupant, for example to reach in-car entertainment controls or storage compartments. However the retractor is biased to keep the webbing relatively taut about the seat occupant and a locking element locks the retractor against webbing payout in the event of high loads indicating that a dangerous situation is detected. For example, an acceleration sensor activates if the vehicle undergoes rapid acceleration or deceleration indicative of a crash.

The belt webbing is fastened to the buckle mechanism by a buckle tongue which is slidably attached to the webbing so that the proportions of webbing making up the lap and torso sections can easily be varied to suit the size and shape of the occupant.

Known seat belt restraints of this sort tend to be unsuitable for vehicle occupants of shorter than average stature, particularly for children, because the shoulder fastening point is fixed to accommodate an average person and is fixed at or above the height of the back of the seat. This is particularly so in rear seat safety restraints.

Thus the torso section of the belt tends to be badly positioned for a child or short person and usually passes too close or adjacent to the child's neck. Because the child does not fit into the adult belt properly the child's shoulder can roll out of the seat belt during the crash effectively making the seat belt a two-point lap belt only. In addition the child may slide under the lap section; this is known as submarining. It is well known that children feel uncomfortable with adult seat belt restraints and often position the torso section behind their shoulder to reduce discomfort.

A solution to this problem is exemplified in a product known as "The Generation Belt" which provides an additional, vertically extending understrap which is fastened taut in a generally vertical line to the back of the seat. A shoulder support for the seat belt is slidably attached to the vertically extending strap so that its vertical position can be varied to suit the position of the seat occupant's shoulder. This is described in GB 2015321 A.

This belt was designed for comfort rather than safety and does not comply with the latest safety regulations of which at least one is ECE 44/03.

US 2004/0061323 to Xu discloses a three-point seat belt restraint system for both an adult and a child which uses a plurality of buckle members distributed on the seat back. The buckle members are selectively engaged by a tongue plate attached to a webbing loop holding the shoulder belt. In this way the departure angle at which the shoulder belt extends across the body of a user can be adjusted.

This system requires costly, large and unsightly means to locate the shoulder belt in each position. This not only detrimentally affects the aesthetics of the seat, but the protruding features are likely to cause discomfort to a larger seat occupant. The known method also requires significant structural changes to the seat and seat upholstery to accommodate the mechanism.

According to the present invention there is provided a vehicle seat arrangement comprising: a seat backrest having an upholstered part overlying a load bearing plate; a first plurality of holes passing through the upholstered part and a second, aligned, plurality of holes passing through the load bearing plate a webbing adapter having a loop for receiving seat belt webbing; and means for removably connecting the webbing adapter to any one of a plurality of positions on the load bearing plate through the upholstered part of the seat backrest; at least one retractable projection located on the webbing adapter arranged to cooperate with any one of the aligned pairs of the plurality of holes; and wherein the webbing adapter comprises a stalk sized to be insertable through any of the holes and wherein the retractable projection is located on the stalk to lock the webbing adapter in a chosen hole in the load bearing plate.

The or each projection may be retractable by means of a spring loaded pushable button.

Preferably the adapter loop has a gap in its circumference so that the webbing can be inserted sideways. A spring loaded lever may be provided across the gap to prevent the webbing accidentally becoming released from the loop.

The invention provides location and fixing points on a vehicle seat which will take crash loads and which can be used to position a webbing adapter to serve as a webbing adapter for a standard seat belt in a suitable position for when a child is using the seat.

The position of the webbing adapter can be altered to suit the size of the child and can be removed altogether if an adult uses the seat belt. The webbing adapter can be made small enough to be easily stowable in a vehicle, for example in a glove compartment. This invention can be used with or without a child seat or booster seat and the position of the webbing adapter can easily be adapted to suit different child/booster seats as required. However it has the advantage of allowing a normal vehicle seat to be used interchangeably for either a child or an adult without the need to carry a bulky child seat or booster seat.

Preferably the holes are small so as to avoid significantly changing the appearance of the seat and since the webbing adapter is removable there is nothing protruding from the backrest to spoil the comfort of an adult using the same seat.

The invention can provide a vehicle safety restraint which is simple, cost effective and flexible. It is safer and more comfortable for children of a variety of sizes, and can easily be adapted for adults or removed so that a seat can be used normally with no detriment to comfort or safety for an adult, and which has a minimal visual impact on the look of the seat.

For a better understanding of the present invention and to show how the same may be carried into effect, reference will now be made to the accompanying drawings, in which:
Figure 1 is a schematic front view of a vehicle seat arrangement according to the present invention;
Figure 2 is a schematic side view of the vehicle seat arrangement of figure 1 in use;
Figure 3 is a schematic cross sectional side view of a part of the arrangement of Figures 1 and 2;
Figure 4 is an enlarged front view of the part of the arrangement shown in Figure 3 in more detail;
Figure 5 illustrates an alternative embodiment of the part shown in Figures 3 and 4;
Figure 6 illustrates the part shown in Figure 5 in more detail;
Figure 7 is a schematic front view of a vehicle seat arrangement according to the invention of EP 06123208;
Figure 8 is a schematic cross sectional side view of the arrangement of Figure 7;
Figure 9 is an enlarged front view of an alternative embodiment of a locking plate for the arrangement of Figures 7 and 8;
Figures 10a to 10d illustrate a locking and releasing mechanism for use with the seat arrangement of Figures 7, 8 and 9.

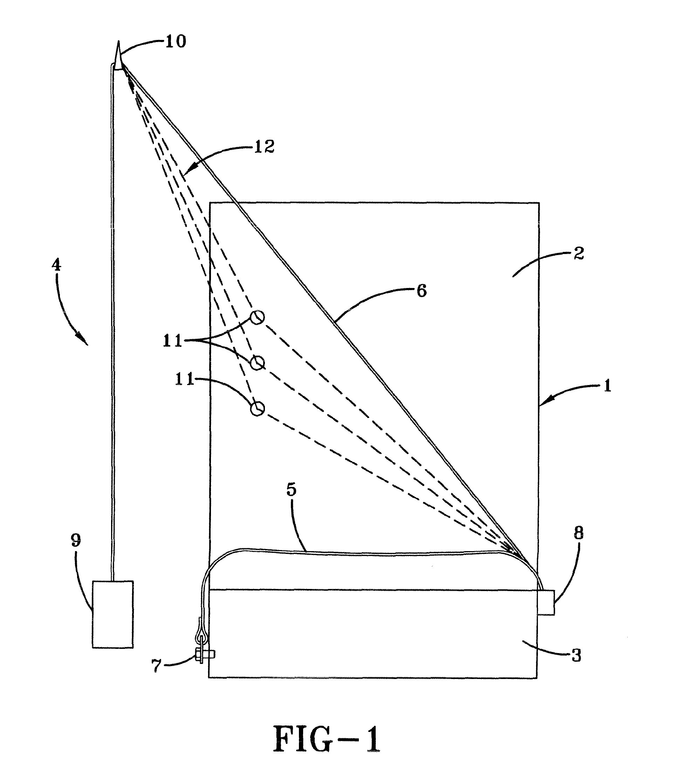

Figure 1 shows an upholstered vehicle seat 1 with a backrest 2 and seat squab 3. A seat belt safety restraint shown generally at 4 comprises a lap portion 5 passing across the hips of a seat occupant (not shown) from one side of the seat to the opposite side, and a torso portion 6 passing diagonally across the seat from an occupant's hip to the opposite shoulder. The seat belt is anchored to a load bearing part of the vehicle at three points 7, 8, 9. The load bearing attachment 7 usually comprises a bolt to a longitudinal chassis member of the vehicle. The load bearing attachment at 8 comprises a buckle mechanism wherein the buckle is anchored to the vehicle chassis and the seat belt webbing 5, 6 passes through a tongue which is engageable with the buckle. The load bearing attachment 9 comprises a retractor bolted to a load bearing part of the vehicle such as a pillar and which serves to allow the seat occupant more comfort by allowing payout of the webbing under low loads whilst comprising a locking mechanism which engages under high loads indicative of a crash to lock the retractor against further payout. The belt webbing is supported in the general shoulder position of a seat occupant by a webbing guide 10 at an upper fixing point comprising a load bearing part of the vehicle such as the side pillar. The webbing guide 10 may comprise either a turning loop or a conventional height adjuster. Alternatively the retractor 9 can be fixed directly in the general shoulder position, for example directly on a seat back 2 or to a parcel shelf or load bearing bar behind the seat back 2.

Three holes 11 in the form of eyelets are made in the seat backrest 2, generally in a range of positions which are likely to fall in the shoulder region of a child between three and fourteen years of age. The lowest hole should be at the average minimum shoulder height for a child of three years of age, approximately 18 kilograms weight. The highest hole will be at approximately the average shoulder height for a fourteen year old child. These holes are used to attach a webbing adapter which serves as a supplementary shoulder support for the child to adapt the seat belt webbing path and divert the torso section 6 of the seat belt 4 along the lines indicated by the broken lines 12. These positions for the torso section 6 of the seat belt are more suitable for a child because they are safer and more comfortable. Of course any number of holes 11 may be provided.

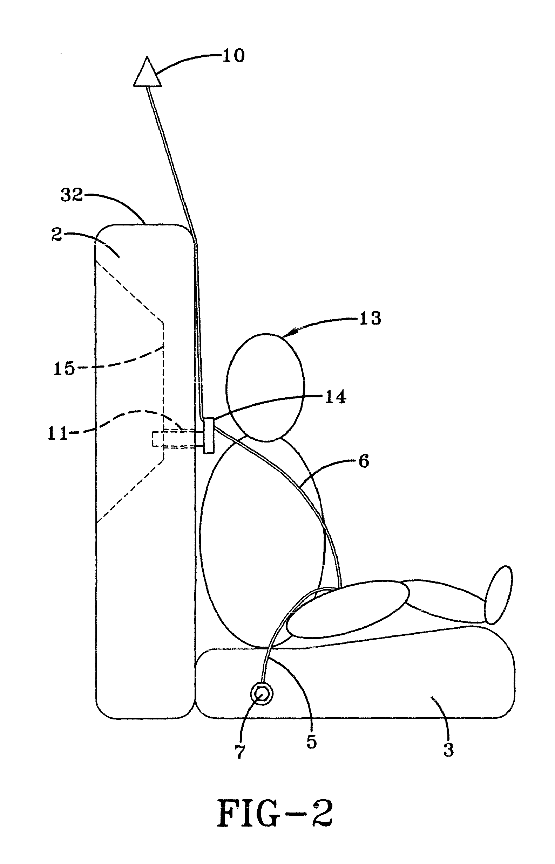

In Figure 2 a side view of the seat belt arrangement of Figure 1 is shown in use with a child 13 sitting on the seat squab 3 against the upholstered part 32 of the seat backrest 2. The seat belt again comprises a lap portion 5 and a torso section 6 but here the torso section 6 is diverted via a webbing adapter 14 which is inserted in the lowest hole 11 in the backrest 2. In order to provide sufficient strength in the backrest 2, to ensure that the webbing adapter 14 is secured in a load bearing fashion, a metal plate 15 is made part of the seat structure as shown. Alternatively, a metal plate could be bolted or otherwise secured to the outside at the rear of the backrest. It can be seen that the child 13 is more safely and comfortably secured because the torso section 6 of the seat belt passes over or close to his shoulder.

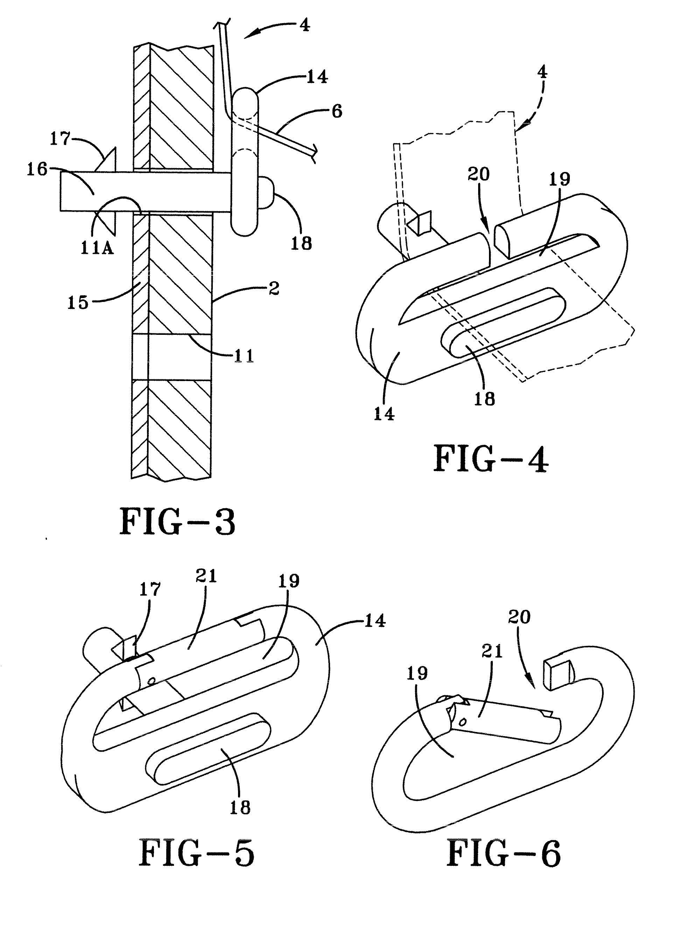

In Figure 3 the webbing adapter 14 is shown in more detail. The webbing adapter 14 passes through the upper of two holes 11 in the backrest 2, and through corresponding holes in the metal plate 15 which is incorporated into the seat back 2. It has a stalk 16 at one end of which are retractable projections 17 which lock the webbing adapter 14 in the hole 11. At the other end of the stalk, facing the seat occupant, is a button 18 for retraction of the projections 17 and a loop through which the webbing 4 passes as it passes from the torso section 6 to the webbing guide 10 fixing in the upper position.

In Figure 4 this webbing adapter 14 is shown in front view and like parts are denoted by like reference numbers. The loop 19 through which the webbing 4 passes is shown with a centrally located gap 20 in its circumference so that the webbing 4 can be easily inserted from its side.

In Figure 5 the webbing adapter 14 is shown in an alternative embodiment with a spring loaded clip 21 over the gap 20. This is shown in more detail in Figure 6. The spring loaded clip 21 makes the webbing adapter 14 act like a carabiner used in climbing to channel ropes. The clip is deflectable inwardly when webbing is being inserted into the loop but is prevented from outward deflection and thus retains the webbing in the loop against accidental release due to pressure from the webbing. It can be released from the loop by manual depression of the clip.

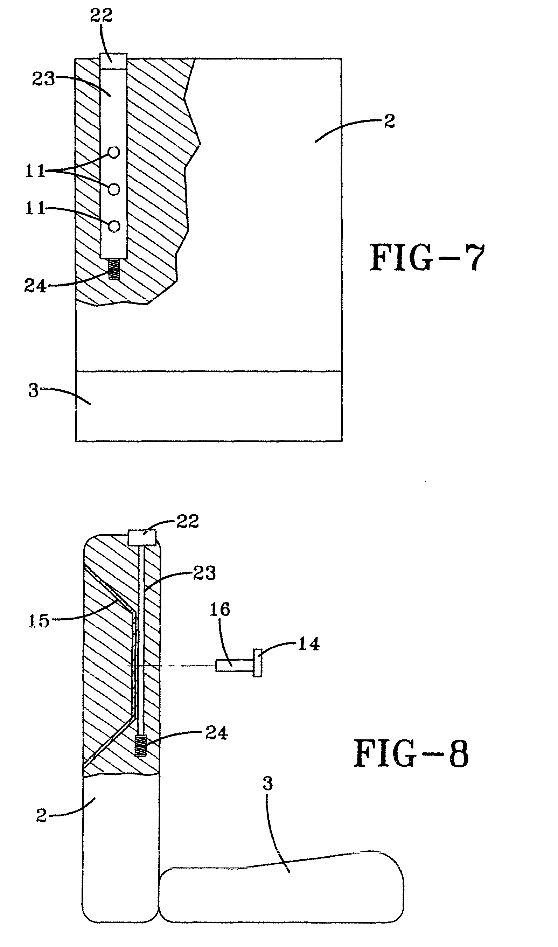

In Figures 7 and 8 an alternative vehicle seat arrangement is shown. The webbing adapter 14 is releasable from the backrest 2 by an adapter release button 22 located on the backrest 2 of the vehicle seat 1. The upholstery on the front of the backrest 2 is not shown in Figure 7 so as to more clearly illustrate the features of the invention. A lock plate 23, having two or more holes 11, is positioned on the backrest 2, generally parallel to the metal plate 15 (Figure 8). The lock plate 23 is movable in a generally vertical direction and can be moved towards the seat squab 3 by means of the adapter release button 22 connected to a first end of the lock plate 23. This movement is resisted by a spring 24 connected to a second opposite end of the lock plate 23. In this example the holes 11 are circular in shape, although in practice they can be any shape which is adapted to engage with the stalk 16 of the webbing adapter 14 to lock the guide 14 in position. The stalk 16 may have a discontinuity such as an indented section or hole to engage more positively with the holes 11.

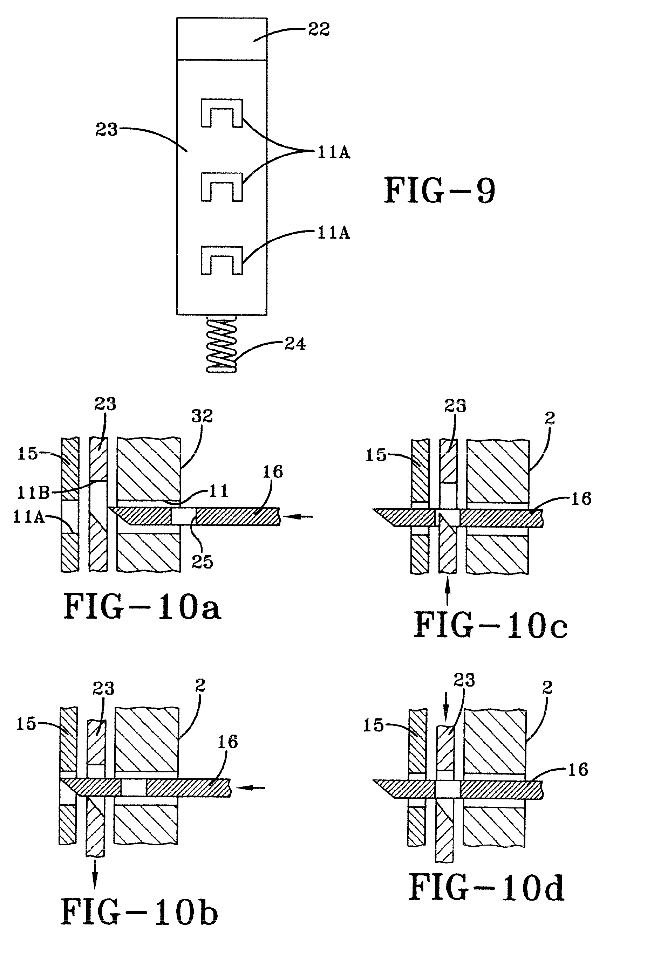

Figure 9 shows another example of a lock plate 23 in which the holes 11 are shaped as inverted Us so as to engage a stalk (not shown) with a hole though it.

Figures 10a to 10d show in sequence how the movable lock plate 23 can engage the stalk 16 of the webbing adapter 14 and, in combination with the metal plate 15, how the stalk 16 is locked in position. The arrows illustrate the direction of travel for each component. Figure 10a shows the stalk 16 of the webbing adapter 14 being pushed into a hole in the upholstered part of the backrest 2. The hole or indentation 25 on the stalk 16 is shown with dashed lines. Figure 10b shows how the stalk 16 pushes against the locking plate 23 thereby forcing it to move downwardly in a generally vertical direction to allow the stalk 16 to pass through the hole 11 in the locking plate 23. The forward end of the stalk 16 and the lower side of the hole 11 in the locking plate 23 are preferably tapered to resist joining.

As shown in Figure 10c, once the stalk 16 has been pushed far enough into the hole 11 so that the indentation 25 reaches the locking plate 23, then the spring (not shown) forces the locking plate 23 to move back substantially to its normal position, thereby locking the stalk 16 in place. The metal plate 15, also with a hole though it, is included to strengthen the locking mechanism.

Finally, Figure 10d shows how the stalk 16 can be released by moving the locking plate 23 downwardly to allow the stalk 16 to be pulled out of the backrest 2. The locking plate is moved downwardly, against the bias of a spring, by an adapter release button 22 shown in Figure 9 on top of the locking plate 23.

To aid understanding of this invention the following paragraphs are included. These formed the originally filed claims of the parent application EP 06123208:
1. A vehicle seat arrangement comprising:
   a seat backrest (2) having an upholstered part (32) overlying a load bearing plate (15);
   a first plurality of holes (11) passing through the upholstered part (32) and a second, aligned, plurality of holes (11A) passing through the load bearing plate (15);
   a webbing adapter (14) having a loop (19) for receiving seat belt webbing (6); and
   means for removably connecting the webbing adapter (14) to any one of a plurality of holes on the load bearing plate (15) through the corresponding holes in the upholstered part (32) of the seat backrest (2).
2. A vehicle seat arrangement according to claim 1 comprising at least one retractable projection (17) located on the webbing adapter (14) arranged to cooperate with any one of the aligned pairs of the plurality of holes (11, 11A) .
3. A vehicle seat arrangement according to claim 2 wherein the webbing adapter (14) comprises a stalk (16) sized to be insertable through any of the holes (11, 11A) and wherein the retractable projection (17) is located on the stalk (16) to lock the webbing adapter (14) in a chosen hole (11A) in the load bearing plate (15).
4. A vehicle seat arrangement according to claim 2 or claim 3 wherein the projection (17) is retractable by means of a spring loaded pushable button (18) located on the webbing adapter (14).
5. A vehicle seat arrangement according to claim 1 wherein the seat backrest (2) further comprises a movable lock plate (23) having a third plurality of holes (11B), wherein the lock plate (23) is movable into a position in which the third plurality of holes (11B) is aligned with the first (11) and second (11A) plurality of holes, so that the stalk (16) of the webbing adapter (14) can be inserted through corresponding aligned holes (11, 11A, 11B) in the upholstered portion (32), the lock plate (23) and the load bearing plate (15), and wherein the lock plate (23) is biased toward a position in which the third plurality of holes (11B) is not aligned with the first and second plurality of holes (11, 11A) so that the lock plate (23) engages the stalk (16) to lock the adapter (14) to the backrest (2).
6. A vehicle seat arrangement according to claim 5 wherein the lock plate (23) is normally held in a non-aligned position by a spring (24) and is movable to an aligned position by means of a release button (22).
7. A vehicle seat arrangement according to any one of the preceding claims wherein the loop (19) of the webbing adapter has a gap in its circumference through which seat belt webbing can be inserted from its side edge.
8. A vehicle seat arrangement according to claim 7 wherein the webbing adapter (14) comprises a spring loaded lever (21) which closes said gap to resist webbing being released from the loop (19) accidentally.
9. A vehicle seat arrangement according to claim 8 wherein the spring loaded lever (21) is pivotally movable inwardly of the loop (19) and is prevented from movement outwards by abutment with the loop (19).

## Claims

1. A vehicle seat arrangement comprising:
a seat backrest (2) having an upholstered part (32) overlying a load bearing plate (15);
a first plurality of holes (11) passing through the upholstered part (32) and a second, aligned, plurality of holes (11A) passing through the load bearing plate (15);
a webbing adapter (14) having a loop (19) for receiving seat belt webbing (6);
means for removably connecting the webbing adapter (14) to any one of a plurality of holes on the load bearing plate (15) through the corresponding holes in the upholstered part (32) of the seat backrest (2);
at least one retractable projection (17) located on the webbing adapter (14) arranged to cooperate with any one of the aligned pairs of the plurality of holes (11, 11A) ; and
wherein the webbing adapter (14) comprises a stalk (16) sized to be insertable through any of the holes (11, 11A) and wherein the retractable projection (17) is located on the stalk (16) to lock the webbing adapter (14) in a chosen hole (11A) in the load bearing plate (15).

2. A vehicle seat arrangement according to claim 1 wherein the projection (17) is retractable by means of a spring loaded pushable button (18) located on the webbing adapter (14).

3. A vehicle seat arrangement according to any one of the preceding claims wherein the loop (19) of the webbing adapter has a gap in its circumference through which seat belt webbing can be inserted from its side edge.

4. A vehicle seat arrangement according to claim 3 wherein the webbing adapter (14) comprises a spring loaded lever (21) which closes said gap to resist webbing being released from the loop (19) accidentally.

5. A vehicle seat arrangement according to claim 4 wherein the spring loaded lever (21) is pivotally movable inwardly of the loop (19) and is prevented from movement outwards by abutment with the loop (19).

## Amended claims

### Amended claims in accordance with Rule 137(2) EPC.

**1.** A vehicle seat arrangement comprising:
a seat backrest (2) having an upholstered part (32) overlying a load bearing plate (15);
a first plurality of holes (11) passing through the upholstered part (32) and a second, aligned, plurality of holes (11A) passing through the load bearing plate (15);
a webbing adapter (14) having a loop (19) for receiving seat belt webbing (6), the loop (19) having a gap in its circumference through which seat belt webbing can be inserted from its side edge;
means for removably connecting the webbing adapter (14) to any one of a plurality of holes on the load bearing plate (15) through the corresponding holes in the upholstered part (32) of the seat backrest (2);
at least one retractable projection (17) located on the webbing adapter (14) arranged to cooperate with any one of the aligned pairs of the plurality of holes (11, 11A) ;
wherein the webbing adapter (14) comprises a stalk (16) sized to be insertable through any of the holes (11, 11A) and wherein the retractable projection (17) is located on the stalk (16) to lock the webbing adapter (14) in a chosen hole (11A) in the load bearing plate (15); and
**characterised in that** the webbing adapter (14) comprises a spring loaded lever (21) which closes said gap to resist webbing being released from the loop (19) accidentally.

**2.** A vehicle seat arrangement according to claim 1 wherein the projection (17) is retractable by means of a spring loaded pushable button (18) located on the webbing adapter (14).

**3.** A vehicle seat arrangement according to claim 1 wherein the spring loaded lever (21) is pivotally movable inwardly of the loop (19) and is prevented from movement outwards by abutment with the loop (19).
